(19) Europäisches Patentamt

European Patent Office

Office européen des brevets

(11) **EP 0 658 833 B1**

(12) **EUROPÄISCHE PATENTSCHRIFT**

(45) Veröffentlichungstag und Bekanntmachung des Hinweises auf die Patenterteilung:
**19.06.1996 Patentblatt 1996/25**

(51) Int Cl.6: **G05B 19/418**, G05B 15/02

(21) Anmeldenummer: 93118903.9

(22) Anmeldetag: **23.11.1993**

(54) **Vorrichtung zur Führung eines technischen Prozesses, welche aus On-line- und Off-line-Prozessmesswerten Sollwerteinstellungen für die optimale Prozessführung in Form von klassifizierten, komprimierter Zuordnungsmesswertesätzen automatisch generiert**

Device for guiding a technical process, which automatically generates command values in form of compressed and classified groups of measurements which are based on on-line and off-line measurements in order to conduct the process optimally

Dispositif de guidage d'une processus technique qui engendre automatiquement des valeurs de consigne sous forme de groupes de mesures comprimées et classées, basées sur des mesures en-ligne et hors-ligne, en vue d'un guidage optimal du processus

(84) Benannte Vertragsstaaten:
**BE DE GB NL SE**

(43) Veröffentlichungstag der Anmeldung:
**21.06.1995 Patentblatt 1995/25**

(73) Patentinhaber: **SIEMENS AKTIENGESELLSCHAFT
D-80333 München (DE)**

(72) Erfinder: **Furumoro, Herbert, Dr.-Ing.
D-91052 Erlangen (DE)**

(56) Entgegenhaltungen:
**WO-A-93/04839**          **WO-A-93/09279**

**Beschreibung**

Vorrichtung zur Führung eines technischen Prozesses, welche aus On-line- und Off-line-Prozeßmeßwerten Sollwerteinstellungen für die optimale Prozeßführung in Form von klassifizierten, komprimierter Zuordnungsmeßwertesätzen automatisch generiert

Bei konventionellen Verfahren und Vorrichtungen zur Führung von technischen Prozessen, insbesondere von Großanlagen in der erzeugenden und verarbeitenden Industrie, ist es bislang trotz aller Bemühungen nur möglich, im wesentlichen einzelne Meßwerte zu erfassen und hieraus einzelne Stellgrößen zur Beeinflussung singulärer Betriebsmittel des technischen Prozesses abzuleiten. Die wechselseitige Beeinflussungen der Auswirkungen einzelner Stellgrößenveränderungen, d.h. die sogenannten "Verkopplungen" zwischen den Prozeßgrößen, können nur sehr unvollkommen berücksichtigt werden.

Eine bekannte, weit verbreitete klassische Methoden der Regelungstechnik hierzu ist z.B. die Strategie der sogenannten Kaskadenregelungen. Hierbei wird durch die Reihenschaltung von Reglern versucht, die direkte Wechselbeziehung von unmittelbar miteinander zusammenhängenden Prozeßmeßgrößen zu beeinflussen. Dennoch ist die Anzahl der auf diese Weise aufgrund ihrer gegenseitigen Wechselbeziehung gleichzeitig bearbeitbaren Prozeßmeßwerte sehr gering. Ferner setzt der Einsatz z.B. einer Kaskadenregelung eine starke, d.h. eindeutig nachweisbare und insbesondere möglichst physikalisch bzw. mathematisch beschreibbare Wechselbeziehung zwischen Prozeßmeßwerten voraus. So können schwache Wechselwirkungen auf im technischen Prozeß u.U. "entfernte" andere Prozeßmeßwerte nicht erfaßt und berücksichtigt werden. Insbesondere können meist nur die Wechselbeziehungen von prozeßinternen Meßwerten, d.h. sogenannten technischen, zur Produktionsanlage gehörigen Meßwerten erfaßt werden. Dagegen ist es meist nicht möglich, in großem Stil und konsequent die Beeinflussung eines Parameters des von der technischen Anlagen erzeugten Endproduktes durch einen oder mehrere prozeßinterne Meßwerte zu erfassen und in Sinne einer gezielten Vorgabe bestimmter Produktqualitäten zu beeinflussen.

Ein weiterer, wesentlicher Nachteil konventioneller Regelungs- und Steuerungsmethoden ist darin zu sehen, daß weit vor einer Inbetriebnahme derselben eine in der Regel außerordentlich aufwendige Projektierung aller vorgesehener Regelkreise notwendig war. In dieser Projektierungsphase mußte im Rahmen einer Modellbildung das voraussichtliche, regelungstechnische Verhalten der einzelnen Betriebsmittel des technischen Prozesses analytisch erfaßt oder doch zumindest abgeschätzt werden, um dann eine hierfür geeignete Regelungs-und Steuermaßnahme z.B. in Form eines bestimmten Reglertyps oder einer bestimmten Steuerkette vorzusehen. Hierbei trat in aller Regel das Problem auf, daß z.B. das vorgesehene Regelungsmittel die Komplexität der wechselseitigen Abhängigkeiten nur sehr unvollkommen beherrschen konnte. Das Modell des Prozeßbetriebsmittels war somit bis zu einem gewissen Grad falsch. Dies hat manchmal zur Folge, daß bei der Inbetriebsetzung u.U. zeitaufwendige Korrekturen an den vorhandenen Prozeßmodellen vorgenommen werden mußten. Manchmal war ein komplettes Redesign der Struktur mancher Regelkreise notwendig. Ein weitere wesentlicher Nachteil konventioneller Regelsysteme besteht darin, daß die während der Projektierung vorgesehenen Regler- und Steuerungsstrukturen insbesondere in Bezug auf die Eingriffsstärke auf die jeweils betroffenen Prozeßbetriebsmittel durch zum Teil langwierige Meß-und Beobachtungsvorgänge in der technischen Prozeßanlage eingestellt werden mußten. Es mußten somit anlagenabhängige z.B. Verstärkungen, Integral- und Differentialanteile entsprechender Regler und vieles mehr ermittelt werden. Bekanntlich erfordert eine Reglerinbetriebnahme außerordentlich viel "Fingerspitzengefühl" und eine, mit allen unbekannten bzw. nicht berücksichtigbaren Randbedingungen im technischen Prozeß annähernd verträgliche Einstellung der Regelkreise herauszufinden.

Demgegenüber liegt der Erfindung die Aufgabe zugrunde einer Vorrichung zur Führung eines technischen Prozesses anzugeben, welche optimale Sollwerteinstellungen für die Betriebsmittel vollautomatisch generieren kann.

Die Erfindung und vorteilhafte, weitere Ausführungsformen derselben werden desweiteren unter Zuhilfenahme der in den nachfolgend kurz angeführten Figuren enthaltenen Darstellungen näher erläutert. Dabei zeigt

Fig.1    ein Blockschaltbild der erfindungsgemäßen Vorrichtung,

Fig.2    den Aufbau eines beispielhaften Meßwertsatz der On-line-Prozeßmeßwerte,

Fig.3    einen vorteilhaften Aufbau des ersten Speichers der erfindungsgemäßen Vorrichtung, der die On-line-Prozeßmeßwerte mit einer Vielzahl von in der Vergangenheit liegenden Meßwertsätzen enthält,

Fig.4    einen vorteilhaften Aufbau des zweiten Speichers der erfindungsgemäßen Vorrichtung, der einen beispielhaften Meßwertsatz der Off-line-Prozeßmeßwerte enthält,

Fig.5    eine Zeitdiagramm zur Erläuterung der Bildung der mittleren Betriebsmittelverweilzeiten aus den Verweilzeiten eines jeden Betriebsmittels,

Fig.6 einen vorteilhaften Aufbau des dritten Speichers der erfindungsgemäßen Vorrichtung, der die vom sogenannten "Fallerzeuger" gebildeten Zuordnungswertesätze enthält,

Fig.7 eine Wertediagramm zur beispielhaften Erläuterung der im sogenannten "Fallklassifizierer" der erfindungsgemäßen Vorrichtung durchgeführten Segmentierung der Wertebereiche aller Off-line- und On-line-Prozeßmeßwerte, und

Fig.8 beispielhaft einen komprimierten und klassifizierten Zuordnungswertesatz für einen Kennwert $Q_i$ eines beispielhaften Endproduktes.

Die Grundlage der erfindungsgemäßen Vorrichtung bildet die in der Regel sehr große Anzahl der in einer komplexen technischen Herstellungs- und/oder Verarbeitungsanlage, desweiteren technischer Prozeß genannt, zyklisch verfügbaren Prozeßmeßwerte. Dabei kann zwischen den durch automatische Messungen mit sogenannten On-line-Verfahren direkt im Prozeß und den durch externe Analysen mit sogenannten Off-line-Verfahren erfaßbaren Prozeßmeßwerten unterschieden werden.

Die erfindungsgemäßen Vorrichtung ist vorteilhaft so ausgelegt, daß zwei Gruppen von Prozeßmeßwerten berücksichtigt werden können. Die erste Gruppe betrifft die mit sogenannten on-line-Verfahren durch Abfrage von direkt im Inneren des technischen Prozesses verteilt angeordneten Meßgebern gewonnenen Prozeßmeßwerte. Diese werden mit einer hohen Abtastrate, z.B. alle 1 bis 2 Minuten, zyklisch und vollautomatisch erfaßt. Diese werden desweiteren On-line-Prozeßmeßwerte genannt.

Die zweite Gruppe betrifft die mit sogenannten Off-line-Verfahren gewonnenen Prozeßmeßwerte, welche in der Regel auch zyklisch, aber bei einer häufig erheblich niedrigerer Abtastrate zur Verfügung stehen, z.B. alle 10 bis 20 Minuten. Die Erfassung dieser Prozeßmeßwerte erfolgt in der Regel auf dem Wege einer Probenentnahme im technischen Prozeß und einer anschließenden extern, vorrangig in einem Labor u.U. vollautomatisch durchführten Analyse. Diese werden desweiteren Off-line-Prozeßmeßwerte genannt.

Die On-line-Prozeßmeßwerte werden annähernd zeitsynchron zyklisch erfaßt, d.h. mit einer fest eingestellten Abtastzeit. Die dazugehörigen Abtastzeitpunkte sind bevorzugt hochfrequent getaktet und können einen Abstand von z.B. 1 bis 2 Minuten haben. Diese Abtastzeitpunkte werden in der Regel asynchron zu den Abläufen im technischen Prozeß von der zur Führung des technischen Prozesses dienenden, erfindungsgemäßen Vorrichtung vorgegeben. Hierzu werden alle im technischen Prozeß verteilten Meßwertgeber abgefragt und die anstehenden aktuellen Werte eingelesen. Vorteilhaft ist die erfindungsgemäße Vorrichtung in Form eines sogenannten Automatisierungssystems z. B. als speicherprogrammierbare Steuerung ausgeführt.

Die Abtastzeitpunkte können aber auch durch den technischen Prozeß selbst festgelegt werden, d.h. synchron mit diesem verlaufen. Die Abtastzeitpunkte fallen dann mit in der Regel zyklisch wiederkehrend auftretenden, besonderen Ereignissen des technischen Prozesses zusammen und werden von diesen getriggert. Im Beispiel einer zur Herstellung von Zellstoff dienenden technischen Anlage können die Abtastzeitpunkte mit den ca. alle 2 Stunden durchzuführenden Kocherentleerungen. zusammenfallen.

Im zeitlichen Abstand des Starts und der Beendung eines Batches, d.h. der zur Bearbeitung einer Charge von Zellstoff benötigten Zykluszeit, werden die auftretenden On-line-Prozeßmeßwerte erfaßt.

Die On-line-Prozeßmeßwerte sind in der Regel Meßwerte, Stellwerte und Maschineneinstellungen von den Betriebsmitteln des technischen Prozesses. Dabei können die Meß- und Stellwerte auch als Prozeß- bzw. Produktionseinstellungen bezeichnet werden. Die Meß- und Stellwerte sind in der Regel kontinuierliche Zeitverläufe von Größen mit physikalischer bzw. chemischer Natur. Als Beispiele seinen die in einzelnen Betriebsmitteln des technischen Prozesses auftretenden Drücke, Temperaturen, Konsistenzen, Durchflüsse und dergleichen genannt. Bei den Stellwerten handelt es um rückgeführte Istwerte von Stellungen beeinflußbarer Betriebsmittel des technischen Prozesses, z, B. um Öffnungsgrade von Schiebern, Ventilen und dergleichen.

Unter Maschineneinstellungen werden mechanische Einstellungen an den einzelnen Betriebsmitteln verstanden. Diese kennzeichnen den aktuellen Betriebszustand des jeweiligen Betriebsmittels, und können prozeßtechnisch nicht direkt in Zusammenhang mit dem im Hinblick auf die Erzeugung eines, gewünschte Eigenschaften aufweisenden Endproduktes notwendigen Prozeßzustand gebracht werden. Die Maschineneinstellungen können somit allgemein als binäre, aktuelle Ein- und Ausschaltzustände beschreibende Zustandsgrößen angesehen werden. Derartige Maschineneinstellungen können sein z.B. die Verfügbarkeit einzelner Betriebsmittel, etwa die Anzahl von an der Produktion beteiligter Behälter gegenüber der Anzahl der momentan abgeschalteten Behälter, die zeitkoordinierte Zu- und Abschaltung einzelner Aggregate, d.h. die Aufeinanderfolge des Einsatzes von Betriebmitteln im Bearbeitungsprozeß, die Vorgabe von stufenartig veränderbaren Öffnungsweiten z.B. von Düsen, Lippen u. dgl. .

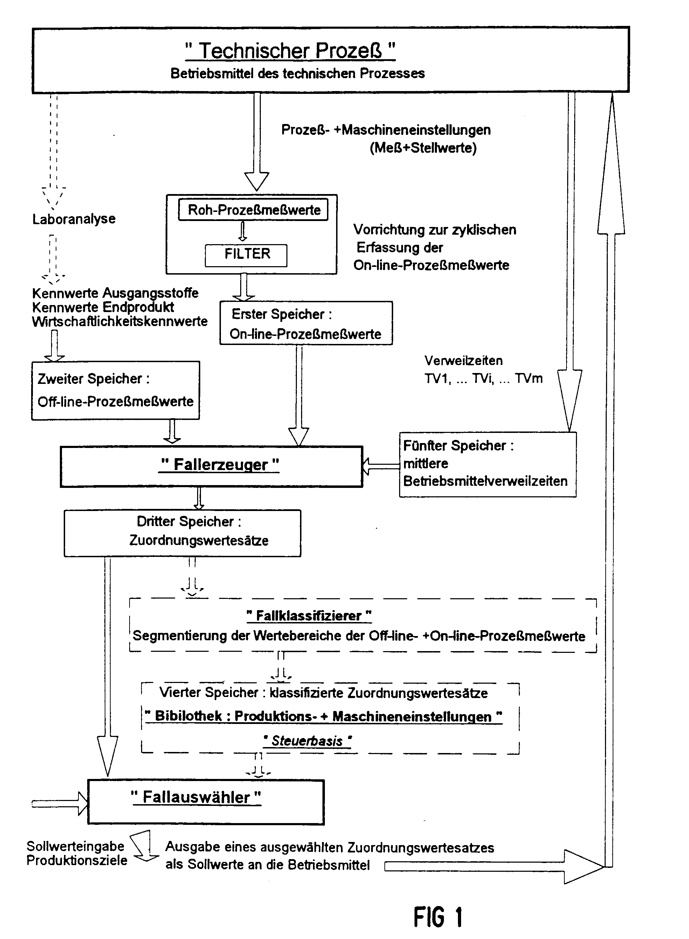

An dem in der Figur 1 dargestellten Blockschaltbild werden der Aufbau und die Funktion der erfindungsgemäßen Vorrichtung nachfolgend im Detail erläutert.

Die erfindungsgemäße Vorrichtung weist eine erste Vorrichtung zum zyklischen Meßwerterfassung auf, welche die aktuellen Werte der On-line-Prozeßmeßwerte erfaßt und in einem speziell eingerichteten, sich anschließenden ersten Speicher für On-line-Prozeßmeßwerte ablegt. Bevorzugt wird die zur Führung des technischen Prozesses dienende Vorrichtung, insbesondere ein Automatisierungssystem, gleichzeitig als die Vorrichtung zur Meßwerterfassung und als der ersten Speicher für die On-line-Prozeßmeßwerte benutzt.

Bei einer weiteren, in Figur 1 bereits dargestellten Ausführungsform bevorzugt erfolgt in der Vorrichtung zur zyklischen Meßwerterfassung zusätzlich eine Bearbeitung der On-line-Prozeßmeßwerte. Hierzu ist ein Filter vorgesehen, welches Glättungen der Meßwerte und verschiedenste Arten der Überwachung vornimmt, z.B. Überwachungen auf das Vorliegen eines gültigen Meßbereiches, auf mögliche Verfälschungen der Istwerte hervorgerufen von Drahtbrüchen, auf den Ausfall von Sensoren und Meßgebern u.dergleichen. Bevorzugt werden somit zunächst sogenannte Roh-On-line-Prozeßmeßwerte mit einer noch erheblich höheren Abtastfrequenz erfaßt, z.B. jede Sekunde. Die auf diese Weise anfallenden Roh-On-line-Prozeßmeßwerte werden dann im Filter insbesondere durch Glättung zusammengefaßt und erst nach erfolgreicher Filterung als die eigentlichen, gültigen On-line-Prozeßmeßwerte in den ersten Speicher eingetragen. Dieser Eintrag erfolgt dann mit einer etwas reduzierten Abtastzeit, z.B. alle 1 bis 2 Minuten.

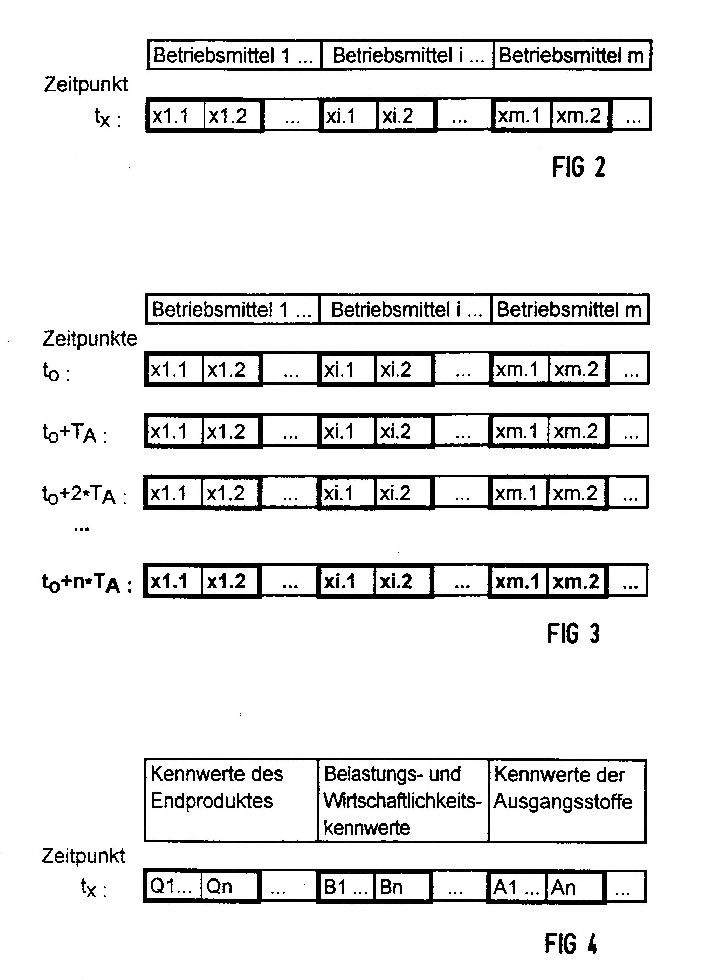

Durch jede dieser Abtastungen wird somit c.a. alle 1 bis 2 Minuten ein für diesen Zeitpunkt gültiges, aktuelles Prozeßabbild in Form eines abgeschlossenen Meßwertsatzes von On-line-Prozeßmeßwerten im ersten Speicher hinterlegt. Eine mögliche, bevorzugte Form eines derartigen Meßwertsatzes ist beispielhaft in der Figur 2 dargestellt.

Der Meßwertsatz enthält alle zu einem beispielhaften Zeitpunkt $t_x$ gültigen On-line-Prozeßmeßwerte eines aus den Betriebsmitteln 1...i...m bestehenden technischen Prozesses. Der Zeitpunkt $t_x$ kann auch als ein Vielfaches n der Abtastzeit $T_A$ bezüglich eines Anfangszeitpunktes $t_o$ dargestellt werden, d.h. als $t_x = t_o + n * T_A$ dargestellt werden. Der Meßwertsatz enthält somit die für alle Betriebsmittel 1...i...m des technischen Prozesses gehörigen On-line On-line-Prozeßmeßwerte, d.h. für das Betriebsmittel 1 die Meßwerte x1.1, x1.2, ... , für das Betriebsmittel i die Meßwerte xi.1, xi.2, ... , und für das Betriebsmittel m die Meßwerte xm.1, xm.2, ...

Der erste Speicher ist dabei erfindungsgemäß so ausgelegt, daß eine möglichst große Anzahl von Meßwertsätzen von zeitlich zurückliegenden Abtastungen vorrätig gehalten werden kann. Der Speicher enthält somit eine große Anzahl von in der Vergangenheit vorgelegenen Prozeßabbildern. In Figur 3 ist beispielhaft eine bevorzugte Ausführung des ersten Speichers der On-line-Prozeßmeßwerte dargestellt. Jede Zeile stellt einen getrennten Meßwertsatz dar, der für den links davon angegebenen Zeitpunkt gültig war, d.h. im Inneren des technischen Prozesses aufgetreten ist. Dabei sind die Meßwerte vorteilhaft nach Betriebsmitteln 1...i...m strukturiert. Die Betriebsmittel können dabei z.B. einen Teil oder den gesamten technischen Prozeß darstellen. Ferner stellt der Faktor n die Anzahl der für die spätere Auswertungen vorrätig gehaltenen Meßwertsätzen dar. Hierdurch kann die sogenannte Betriebshistorie des technischen Prozesses aufgewertet werden.

Bei den Off-line-Prozeßmeßwerten handelt es sich um ergänzende Istwerte aus dem technischen Prozeß. Diese betreffen bevorzugt Kennwerte Q1 ... Q2 des Endproduktes, Belastungs- und Wirtschaftlichkeitskennwerte B1 ... Bn der den technischen Prozeß ausführenden Anlage, und Kennwerte A1 ... An der Ausgangsstoffe. Die Off-line-Prozeßmeßwerte stehen allerdings nur in wesentlichen größeren Zeitabständen als die On-line-Prozeßmeßwerte zur Verfügung. Die Ursache hierfür liegt zum einen darin, daß die Prozeßmeßwerte in vielen Fällen durch zeitaufwendige Laboranalysen von aus dem technischen Prozeß entnommener Stoffproben ermittelt werden müssen. Zum anderen muß der durch den technischen Prozeß in das Endprodukt umzuwandelnde Stoffstrom erst einige oder alle Betriebsmittel des technischen Prozesses durchlaufen haben, bevor z.B. Kennwerte Q1 ... Q2 des Endproduktes laboranalytisch oder mittels automatischer Meßgebern ermittelt werden können. Die Off-line-Prozeßmeßwerte können somit nur mit einer wesentlich geringeren Abtastrate bevorzugt automatisch über die Vorrichtung zur Meßwerterfassung, d.h. bevorzugt direkt über die Vorrichtung zur Prozeßführung, erfaßt werden.

In Figur 4 ist beispielhaft ein möglicher, im Zeitpunkt $t_x$ aufgetretener bzw. abgetasteter Meßwertsatz für Off-line-Prozeßmeßwerte dargestellt.

Die Kennwerte Q1 ... Qn des Endproduktes sind bevorzugt Kenngrößen für die Produkteigenschaften, d.h. die aktuellen bzw. angestrebten Eigenschaften des Endproduktes des jeweiligen technischen Prozesses beschreibende Qualitätskennzahlen. Es handelt sich dabei um die Istwerte der wesentlichen physikalisch, chemischen und technischen Kenngrößen des Endproduktes. Diese Größen sind somit vorrangig produktbezogen und nicht unmittelbar prozeßbezogen, d.h. sie betreffen nicht direkt den aktuellen Zustand eines oder mehrerer Betriebsmittel im Inneren des technischen Prozesses. Diese Größen werden vielfach in einem Labor automatisch bestimmt.

Handelt es sich bei dem technischen Prozeß beispielsweise um eine Anlage zur Erzeugung von Zellstoff bzw. Papier mit unterschiedlich vorgebbaren Qualitäten als Endprodukte, so können z.B. die Reißfestigkeit, die Dicke und die Steifigkeit des Zellstoffes als Kennwerte des Endproduktes herangezogen werden.

Die Belastungs- und Wirtschaftlichkeitskennwerte B1 ... Bn sind Größen, die einerseits die produktionsbedingte Belastung, andererseits auch die Auslastung der Betriebsmittel des technischen Prozesses beschreiben. So handelt es sich hierbei einerseits um Größen, welche die Belastung der Betriebsmittel nach Zeit und Intensität kennzeichnen.

Hiermit können z.B. die Standfestigkeit bestimmende Istlaufzeiten unter wechselnden Prozeßzustandsbedingungen ermittelt werden. Andererseits handelt es sich bei diesen Größen um Werte, die den vorhandenen bzw. zulässigen Verbrauch an Grundstoffen wie z.B. Wasser, Dampf oder auch elektrischer Energie für einzelne Betriebsmittel oder zusammenhängende Teile des technischen Prozesses beschreiben. Es sind somit weitere, die Effektivität und den Gesamtumfang der Produktion, d.h. die Ausbeute an Endprodukt bestimmter Qualität beschreibende Kenngrößen.

Bei den Kennwerten A1 ... An der Ausgangsstoffe handelt es sich um Größen, welche insbesondere z. B. die aktuelle Qualität, die Herkunft, die Sorte, den Gehalt an Hilfs- und Zusatzstoffen und dergleichen bei den zur Erzeugung des jeweiligen Endproduktes benötigten Rohstoffen beschreiben. Bei einer wiederum als Beispiel gewählten Anlage zur Erzeugung von Zellstoff als beispielhafter technischer Prozeß treten als wesentliche Ausgangsstoffe der eingesetzte Holzstoff und die zu dessen Aufschluß benötigten Kochchemikalien auf. Die aktuellen Kennwerte dieser Ausgangsstoffe müssen erfaßt werden, z.B. Qualität, Herkunft und Sorte des verfügbaren Holzstoffes und die Zusammensetzungen bzw. Konzentrationen der angelieferten Kochchemikalien.

Die erläuterten Off-line-Prozeßmeßwerte werden bevorzugt von einer weiteren Vorrichtung zur Meßwerterfassung bereitgestellt und bevorzugt in einem zweiten, im Blockschaltbild der Figur 1 bereits dargestellten Speicher abgelegt. Bevorzugt wird auch hier die zur Führung des technischen Prozesses dienende Vorrichtung, insbesondere ein Automatisierungssystem, gleichzeitig als die Vorrichtung zur Meßwerterfassung und als der zweite Speicher für die On-line-Prozeßmeßwerte benutzt.

Die Meßwerte können dabei zum Teil vollautomatisch über Sensoren, durch Eingabe der Ergebniswerte von Laboranalysen oder durch Eingabe von Sollwerten für Produkteigenschaften oder ergänzende Produktionsziele vorgegeben werden.

Bei einer anderen Ausführungsform der Erfindung kann der zweite Speicher auch entfallen. Dabei werden die Off-line-Prozeßmeßwerte im Moment ihres Auftretens von nachfolgenden Elementen der erfindungsgemäßen Vorrichtung unmittelbar weiterverarbeitet. Ein derartiges Element kann ein sogenannter Fallerzeuger sein. Dies wird nachfolgend noch näher erläutert.

Die erfindungsgemäße Vorrichtung weist nun im Anschluß an die oben beschriebenen Elemente, nämlich die erste Vorrichtung zur zyklischen Erfassung der On-line-Prozeßmeßwerte, den ersten Speicher für die On-line-Prozeßmeßwerte, die zweite Vorrichtung zur zyklischen Erfassung der Off-line-Prozeßmeßwerte und einen gegebenenfalls zusätzlich vorhandenen zweiten Speicher für Off-line-Prozeßmeßwerte, eine erfindungswesentliche Vorrichtung auf, welche desweiteren als "Fallerzeuger" bezeichnet werden soll.

Der Fallerzeuger hat die Aufgabe, den zeitliche Versatz zwischen der schnelleren Ansammlung der On-line-Prozeßmeßwerte und der langsameren Ansammlung der Off-line-Prozeßmeßwerte auszugleichen. Aus den im ersten Speicher der On-line-Prozeßmeßwerte und den im möglicherweise vorhandenen zweiten Speicher der Off-line-Prozeßmeßwerte enthaltenen Meßwertsätze bildete er durch zeitliche Zuordnung sogenannte Zuordnungswertesätze. Diese werden anschließend in einem weiteren Speicher zusammengefaßt, der als dritter Speicher für Zuordnungswertesätze bezeichnet werden soll. Dies wird nachfolgend ausführlich erläutert.

Für die Führung des technischen Prozesses wichtige Kenngrößen, die meist zur Gruppe der Off-line-Prozeßmeßwerte gehören, wie z.B. die Qualität beschreibende Kennwerte des Endproduktes bzw. von Zwischenprodukten bei deren Lauf durch die Produktionsmittel, fallen häufig in größeren Zeitintervallen an als die On-line-Prozeßmeßwerte.

Die Ursache hierfür liegt darin, daß die Stoffströme, welche beginnend bei dem mindestens einen Ausgangsstoff in das jeweilige Endprodukt umgewandelt werden sollen, die Betriebsmittel des technischen Prozesses zeitlich nacheinander durchlaufen. Hierbei werden die Ausgangsstoffe bei jedem Durchlauf durch ein Betriebsmittel zunehmend in Richtung auf das Endprodukt umgewandelt. Bei der weiteren Beschreibung der Erfindung sollen aus Gründen der sprachlichen Vereinfachung alle Stoffzustände, die zwischen Ausgangsstoff und Endprodukt liegen, und das Ergebnis der Stoffbearbeitung durch ein Betriebsmittel des technischen Prozesses sind, als Zwischenprodukte bezeichnet werden. Für die angestrebte Führung des technischen Prozesses ist es wichtig, den am Ausgang eines Betriebsmittels vorliegenden Zustand der Zwischenprodukte zu erfassen und den in diesem Betriebsmittel in diesem Moment vorliegenden Prozeß- und Maschinenbedingungen zuordnen zu können.

Für die Durchführung dieser Zuordnung ist es vorteilhaft, wenn die Dauern der einzelnen Verweilzeiten der Zwischenprodukte in den einzelnen Betriebsmitteln, und vorteilhaft zusätzlich der mittlere Zeitpunkt des Verweilens im betreffenden Betriebsmittel bekannt sind.

In der erfindungsgemäßen Vorrichtung ist hierzu ein weiterer Speicher für die mittleren Betriebsmittelverweilzeiten $T_{mV1}, ... T_{mVi}, ... T_{mVm}$ vorhanden. Dieser wird desweiteren als fünfter Speicher bezeichnet. Die Betriebsmittelverweilzeiten werden aus den Verweildauern $T_{V1}, ... T_{Vi}, ... T_{Vm}$ abgeleitet, welche unter Umständen direkt an den Betriebsmitteln gemessen oder zumindest abgeschätzt werden können. Diese entsprechen den Aufenthaltsdauern des der Umwandlung unterliegenden Stoffstromes in den einzelnen Betriebsmitteln des technischen Prozesses. Für jedes Betriebsmittel BM1...BMi...BMm wird hieraus von der erfindungsgemäßen Vorrichtung eine mittlere Verweilzeit abgeleitet. Diese entspricht dem mittleren Zeitversatz, den ein Zwischenprodukt benötigt, um vom jeweiligen Betriebsmittel 1...i...m bis an das Ende des technischen Prozesses zu gelangen. Erst an dieser Stelle, d.h. im Anschluß an das letzte Betriebsmittel m kann in der Regel der die Kennwerte des Endproduktes betreffende Anteil der Off-line-Prozeßmeßwerte erfaßt werden.

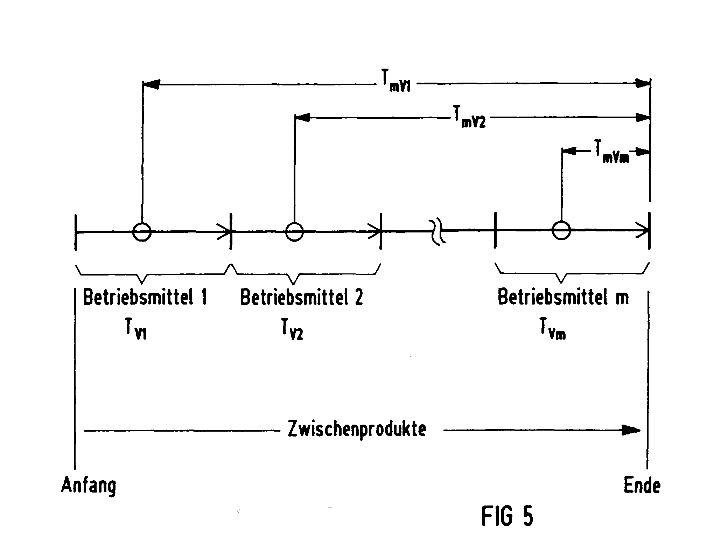

Im Zeitdiagramm der Figur 5 ist dies beispielhaft dargestellt. Dabei sind die zu jedem der Betriebsmittel 1,2 und m gehörigen Verweildauer $T_{V1}, T_{V2}, ... T_{Vm}$ der Zwischenprodukte, und die sich annähernd von der Mitte der jeweiligen Verweildauer bis zum Ende des technischen Prozesses für jedes Betriebsmittel 1,2 bis m ergebende mittlere Betriebsmittelverweilzeit $T_{mV1}, T_{mV2}, ... T_{mVm}$ dargestellt. Der fünfte Speicher für die mittleren Betriebsmittelverweilzeiten $T_{mV1} ... T_{mVi} ... T_{mVm}$ kann somit etwa folgenden Inhalt aufweisen:

BM 1 , $T_{V1}$ :        $T_{mV1}$ ;

BM 2, $T_{V2}$:        $Tm_{V2}$ ;

...

BMm , $T_{Vm}$ :        $T_{mvm}$.

Die Verweilzeiten $T_{V1}, T_{V2} ... T_{Vm}$ des Zwischenproduktes pro Betriebsmittel werden bevorzugt bei Inbetriebnahme des technischen Prozesses einmalig ermittelt und können als konstant angesehen werden. Lediglich bei einer merklichen und andauernden Veränderung der Gesamtproduktionsmenge des technischen Prozesses müssen die Verweilzeiten aktualisiert werden, da hierzu in der Regel alle Betriebsmittel schneller laufen müssen. Die mittleren Betriebsmittelverweilzeiten können auch nach folgender Gleichung bestimmt werden:

$$T_{mVi} = \sum_{j=i+1}^{m} (T_{Vj}) + \frac{1}{2} * T_{Vi}$$

mit 1 ... i ... m.

Die Abtastzeit für die zur Gruppe der Off-line-Prozeßmeßwerten gehörigen Kennwerte der Zwischen- oder Endprodukte ist normalerweise nicht identisch mit der Abtastzeit der On-line-Prozeßmeßwerte. Die Ursache hierfür ist darin zu sehen, daß der Lauf des Zwischenproduktes durch ein einzelnes Betriebsmittel des technischen Prozesses, welches ein bestimmte Veränderung eines Kennwertes im Endprodukt hervorruft, und daß der Lauf des derart veränderten Zwischenproduktes durch die restlichen Betriebsmittel des technischen Prozesses bis zum Erreichen von dessen Ende Totzeiten verursacht. Die auf die Einwirkung des jeweiligen Betriebsmittels zurückzuführende Veränderung der Kennwerte des Endproduktes kann in der Regel erst dann erfaßt werden, wenn das Zwischenprodukt endgültig zum Endprodukt geworden ist, d.h. wenn das Endprodukt am Ausgang des technischen Prozesses verfügbar ist. Erst dann können die Off-line-Prozeßmeßwerte erfaßt werden, so daß als Teil dieser Gruppe insbesondere die Qualität beschreibende Kennwerte des Endproduktes verfügbar sind.

Der Fallerzeuger hat nun die Aufgabe, einem jeden Meßwertesatz der Off-line-Prozeßmeßwerten diejenigen Meßwertesätze der On-line-Prozeßmeßwerte aus dem ersten Speicher zuzuordnen, welche in dem Moment der Entstehung des Zustandes des Endproduktes in dem bzw. den diesen Zustand hervorrufenden Betriebsmitteln vorlagen, und somit die Ursache für den Eintritt des Zustand des Endproduktes sind. In der erfindungsgemäßen Vorrichtung ist hierzu ein dritter Speicher vorgesehen, in den die vom Fallerzeuger bei diesem Vorgang gebildet sogenannten Zuordnungswertesätze abgelegt werden.

Erfindungsgemäß führt der Fallerzeuger bevorzugt in jedem Abtastzeitpunkt für die Off-line Prozeßmeßwerte, d. h. nach jedem Eintreffen eines neuen Meßwertsatzes von Off-line-Prozeßmeßwerten, eine Zuordnung zu den zeitlich und funktionell dazugehörigen Meßwertsätzen der On-line-Prozeßmeßwerte durch, d.h. zu den verursachenden Meß- und Stellwerten und Maschineneinstellungen. Es entsteht somit eine Zuordnung insbesondere von Kennwerten des Endproduktes aus der Gruppe der Off-line-Prozeßmeßwerte zu Kennwerten des technischen Prozesses, d.h. zu den verursachenden Meß- und Stellwerten und Maschineneinstellungen aus der Gruppe der On-line-Prozeßmeßwerte. Da die On-line-Prozeßmeßwerte wegen ihrer kürzerer Abtastzeiten in größeren Mengen anfallen, muß der Fallerzeuger eine Bündelung von mehreren Meßwerten aus den Meßwertsätzen der On-line-Prozeßmeßwerte zu einem komprimierten Meßwertsatz vornehmen, bevor dieser dem vorliegenden Meßwertsatz der Off-line-Prozeßmeßwerte zugeordnet werden kann.

Durch diesen Vorgang wird vom Fallerzeuger jeweils ein Zuordnungswertesatz gebildet und im dritten Speicher abgelegt. Bevorzugt wird bei jedem Auftreten eines neuen Meßwertsatzes der Off-line-Meßwerte ebenfalls ein neuer Zuordnungswertesatz angelegt. Der dritten Speicher wird somit in relativ kurzer Betriebszeit des technischen Prozesses mit einer Vielzahl von Zuordnungswertesätzen gefüllt. Diese können auch Produktionsfälle genannt werden. In den Zuordnungswertesätzen sind für jedes Betriebsmittel Meßwertefelder vorhanden, in denen die den jeweiligen Kennwert des Endproduktes beeinflußenden On-line-Prozeßmeßwerte in komprimierter Form eingetragen sind.

Die zu den einzelnen Betriebsmitteln gehörigen Meßwertefelder der Zuordnungswertesätze müssen mit repräsentativen Werten gefüllt werden. Diese werden vom Fallerzeuger gebildet durch mathematische Operationen, zu den ein einzelner On-line-Prozeßmeßwertesatz oder in der Regel mehrere, aus der Vergangenheit stammende On-line-Prozeßmeßwertesätze herangezogen werden. Ziel ist dabei eine Beschreibung der zu den Kenngrößen gehörenden Einzelwerte oder Wertegruppe der einzelnen Betriebsmittel (Temperatur, Druck, Konzentration, Hilfsstoffzugabe) als physikalische oder chemisch meßbare Größe oder als digitale Betriebsmittelbeschreibung, wie z.B. "läuft/läuft nicht". Durch die Operationen erfolgt eine zeitliche und funktionelle Zuordnung der On-line-Prozeßmeßwerte zu den Kennwerten des Endproduktes. Da üblicherweise die On-line-Prozeßmeßwerte wesentlich häufiger zur Verfügung stehen als die Off-line-Prozeßmeßwerte, z.B. in einem Verhältnis von 20 zu 1, werden die dazugehörigen On-line-Prozeßmeßwerte mit Hilfe der Operationen zu einem Zuordnungswertesatz verdichtet.

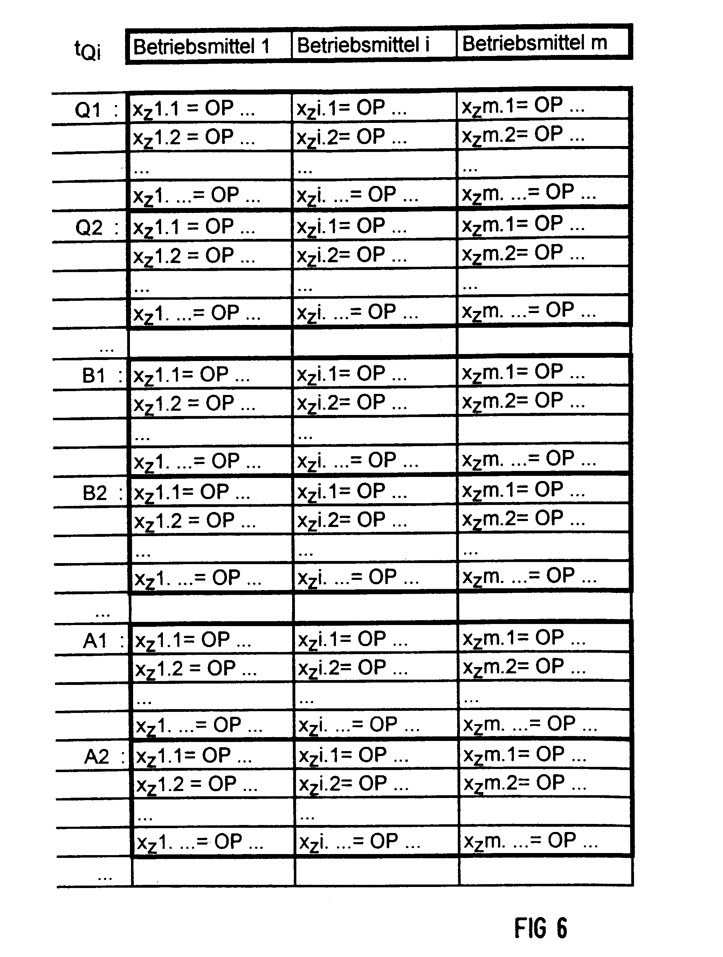

Ein vorteilhafter Aufbau des dritten Speichers der erfindungsgemäßen Vorrichtung, der einen beispielhaften und vom "Fallerzeuger" gebildeten Zuordnungswertesatz enthält, ist in Figur 6 dargestellt. Dabei bedeutet :

$t_{Qi}$ :                Zeitpunkt der Erfassung des Meßwertsatzes der Off-line-Prozeßmeßwerte Q1...Qn,B1...Bn,A1...An.

Q1 ... Qn :           Qualitätsbeschreibende Kennwerte des Endproduktes bzw. von Zwischenprodukten.

B1 ... Bn :           Für die Herstellung des Endproduktes notwendige bzw. dabei aufgetretene Belastungs- und Wirtschaftlichkeitskennwerte des technischen Prozesses.

A1 ... An :           Kennwerte der für Herstellung des Endproduktes eingesetzten Ausgangsstoffe.

OP... :              Mathematische Operationen zur Zusammenfassung verschiedener Meßwerte aus einem oder mehreren Meßwertsätzen der On-line-Prozeßmeßwerte im ersten Speicher zu einem Zuordnungswert.

$x_z 1.1 = OP ...,$      $x_z 1.2 = OP... , x_z 1 ...= OP...$ : Zuordnungswerte für das erste Betriebsmittel.

$x_z i.1 = OP ...,$      $x_z i.2 = OP ... , x_z i....= OP ...$ : Zuordnungswerte für das Betriebsmittel i.

$x_z m.1 = OP ... ,$     $x_z m.2 = OP ... , x_z m. ... = OP ...$ : Zuordnungswerte für das Betriebsmittel m.

Dabei wird für jeden Kennwert Q1, Q2 oder Qz, bzw. B1, B2 oder Bz ,bzw. A1, A2 oder Az aus der Gruppe der Off-line-Prozeßmeßwerte ein einer Zuordnungssatz gebidet.Die Zuordnungswerte $x_z 1.1 = OP... , x_z 1.2 = OP... , x_z 1. ... = OP...$ z.B. für das erste Betriebsmittel entstehen dabei im allgemeinen durch Zusammenfassung entsprechender Meßwerte x1.1, x1.2 ... x1.n, xi.1, xi.2 ... xi.n, xm.1, xm.2 ... xm.n aus einem oder aus mehreren Meßwertsätze der On-line-Meßwerte, die von Fallerzeuger aus dem ersten Speichers entnommen werden. Bevorzugt werden die zum betroffenen Betriebsmittel i gehörigen Meßwerte xi.n verschiedener Abtastungen zusammengefaßt zu einem Wert $x_z i.n$ . Die zusammenzufassenden Meßwertsätze der On-line-Meßwerte sind z.B. entsprechend der Darstellung von Figur 3 in verschiedenen in der Vergangenheit liegenden Abtastzeitpunkten $t_o$ , $t_o + T_A$ , $t_o + 2 x T_A$ , $t_o + n x T_A$ aufgetreten.

Mathematische Operationen OP... führen zu einer repräsentativen, d.h. eindeutig wiederholbaren Beschreibung der Zustandes des technischen Prozesses einschließlich der Maschineneinstellungen im jeweiligen Betriebsmittel zu dem Zeitpunkt, in dem das Endprodukt, dessen Kennwert beschrieben werden soll, im Betriebsmittel bearbeitet wurde. Bei Einstellung der zu einem der Kennwert Q1, Q2 oder Qz, bzw. B1, B2 oder Bz ,bzw. A1, A2 oder Az gehörenden Werte aus dem Zuordnungswertesatz an den dazugehörigen Betriebsmitteln des technischen Prozesses, d.h. bei Vorgabe entsprechender Produktionsbedingungen, wird ein diesen Kennwert aufweisendes Endprodukt reproduziert.

Beispielhaft können von Fallerzeuger folgende mathematische Operationen eingesetzt werden:

1. Zeitliche Zuordnung :

Hierbei wird davon ausgegangen, daß das Zwischenprodukt bereits vor längerer Zeit das seinen Zustand verursachende Betriebsmittel m passiert hat. Vom Fallerzeuger muß auf denjenigen, in der Vergangenheit liegenden Meßwertsatz aus den On-line-Prozeßmeßwerten zurückgegriffen werden, der in dem Moment erfaßt und in den ersten Speicher einschrieben wurde, in dem das Zwischenprodukt das jeweilige Betriebsmittel passierte. Der Fallerzeuger muß also aus der Vielzahl der im ersten Speicher vorrätig gehaltenen Meßwertsätze auf denjenigen zurückgreifen, der zeitgleich mit dem Durchlauf des Zwischenproduktes durch das Betriebsmittel als On-line-Prozeßmeßwerte erfaßt wurde. Hierfür werden vom Fallerzeuger besonders vorteilhaft die im oben genannten fünften Speicher enthaltenen mittleren Betriebsmittelverweilzeiten $T_{mV1}$, $T_{mV2}$, ... $T_{mVm}$ herangezogen. Für den Zuordnungswert $x_z i.1$ des Betriebsmittels i in der Tabelle der Figur 6 hat dies z.B. zur Folge, daß dieser mit dem um den Zeitraum to - m*$T_A$ in der Vergangenheit zurückliegend aufgetretenen Meßwert xi.2 übereinstimmt, d.h.

$x_z i.1 = xi.1(to - m*T_A)$ , bzw. anders ausgedrückt :

$x_z i.1 = xi.1(to - T_{mVi})$ mit m*$T_A = T_{mVi}$ und der zum jeweiligen Betriebsmittel gehörigen mittleren Verweilzeit.

In der Regel besteht für die Anwendung der oben erläuterten, einfachen zeitlichen Zuordnung als mathematische Operation eine Voraussetzung darin, daß keine Stoffstromvermischungen im jeweiligen Betriebsmittel auftreten dürfen, d.h. daß das Zwischenprodukt quasi ohne nennenswerte Massenveränderung das jeweilige Betriebsmittel passiert. Andernfalls muß von Fallerzeuger eine andere mathematische Operation angewendet werden. Diese kann z.B. sei die

2. Mittelwertbildung :

Dabei wird über die zum betreffenden Betriebsmittel gehörigen Meßwerte in denjenigen Meßwertsätzen der On-line-Prozeßmeßwerte gemittelt, die um den Wert der zum Betriebsmittel gehörigen mittleren Verweilzeit $T_{mVi}$ des Zwischenproduktes liegen. Gegebenenfalls kann über alle Meßwertsätze gemittelt werden, die in den ersten Speicher geschrieben wurden, solange sich das Zwischenprodukt im betreffenden Betriebsmittel aufgehalten hat. Für den Zuordnungswert $x_z i.1$ kann beispielsweise allgemein geschrieben werden :

$$ x_z i.1 = \left[ \sum_{j=i-c}^{i+c} xi.1 \Big|_{t=j} \right] * \left( \frac{1}{2c-1} \right) $$

Eine weitere, für den Fallerzeuger mögliche mathematsche Operation ist die

3. Extremwerteauswahl :

Es wird aus den zum betreffenden Betriebsmittel gehörigen Meßwertesätzen der On-line-Prozeßmeßwerte, die in dem Zeitraum in den ersten Speicher eingeschrieben wurden, in dem das Zwischenprodukt sich im betreffenden Betriebsmittel aufgehalten hat, der Extremwert herausgesucht. Bei einer anderen Ausführung wird der Extremwert der um den Wert der zum jeweiligen Betriebsmittel gehörigen mittleren Verweilzeit liegenden und zum Betriebsmittel gehörigen On-line-Prozeßmeßwerte herausgesucht.

Die vom Fallerzeuger durchgeführten mathematischen Operationen können folglich mit aus der Meßtechnik bekannten und zur Meßwerteglättung dienenden Strategien verglichen werden.

Schließlich enthält die erfindungsgemäße Vorrichtung noch eine Einrichtung zur Auswahl des für die gewünschten Betriebsbedingungen des technischen Prozesses optimal geeigneten Zuordnungswertesatzes. Dieses Einrichtung wird desweiteren Fallauswähler genannt.

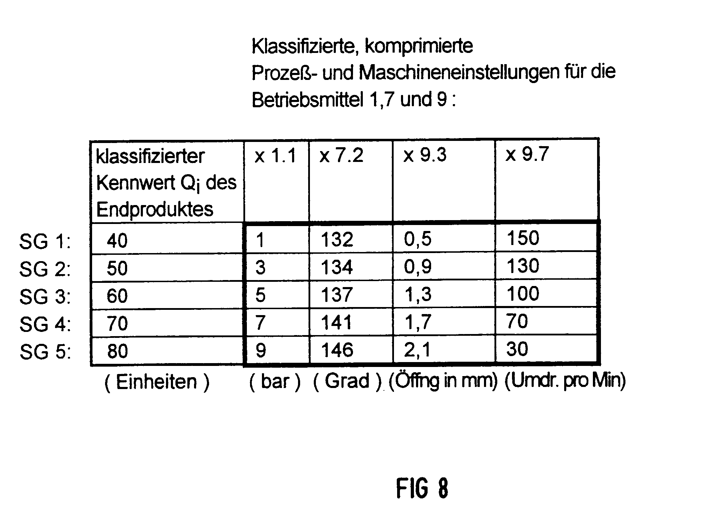

Hierzu werden dem Fallauswähler gemäß der Darstellung in Figur 1 in der Regel zur Gruppe der Off-line-Prozeßmeßwerte gehörige, und dort wiederum gemäß der Darstellung in Figur 4 als Wirtschaftlichkeitskennwerte bezeichnete Größen z.B. in Form von Produktionszielen vorgegeben. Mit diesen Vorgaben wird im dritten Speicher mit den komprimierten, klassifizierten Zuordnungswertesätzen derjenige Zuordnungswertesatz herausgesucht, mit dem die Produktionsziele in der Vergangenheit erreicht worden waren. Gibt es mehrere mögliche Zuordnungswertesätze, wird z.B. derjenige herausgesucht, bei dem die Belastungskennwerte minimal oder die ausgewählten Wirtschaftlichkeitskennwerte maximal sind. Wie bereits am Beispiel der Figur 8 ausgeführt wurde, werden nur die Prozeß- und Maschineneinstellungen an denjenigen Betriebsmitteln des technischen Prozesses verändert, welche die Produktionsziele bzw. die Kennwerte des Endproduktes beeinflussen. Alle anderen Einstellungen des technischen Prozesses bleiben unverändert. Dabei kann es auch möglich sein, daß beim Heraussuchen des besten Zuordnungswertesatzes bestimmte, nicht beeinflußbare Off-line- oder On-line-Prozeßmeßwerte als feste Vorgaben vergleichbar einem Filter eingesetzt werden. Der Vorgang der Auswahl ist im Blockschaltbild der Figur durch einen vom Block des dritten Speichers zum Block des Fallauswählers auf der linken Seite der Zeichnung von oben nach unten gerichteten Pfeil dargestellt.

Der vom Fallauswähler aus dem Inhalt des dritten Speicher bestimmte Zuordnungswertesatz wird schließlich in Form einer Sollwertvorgabe an den dazugehörigen Betriebsmitteln des technischen Prozesses eingestellt. Im Blockschaltbild der Figur 1 ist dies durch zwei abgewinkelt hintereinander auf der rechten Seite der Figur von ganz unten bis ganz oben verlaufende Pfeile dargestellt.

Bei einer weiteren Ausführungsform der erfindungsgemäßen Vorichtung ist eine zusätzliche Verarbeitungseinheit enthalten, welche desweiteren "Fallklassifizierer" genannt wird. Der Fallklassifizierer hat die Aufgabe, im Sinne einer weiteren Komprimierung der Zuordnungswertesätze hieraus diejenigen Zuordnungswertesätze auszuwählen und in einem zusätzlichen vierten Speicher zu hinterlegen, mit denen man einen bestimmten Zustand bzw. eine bestimmte Qualität des Endproduktes in einer charakteristischen, eineindeutigen Weise Zuordnungen mit einstellbaren Prozeß- und Maschineneinstellungen, d.h. On-line-Prozeßmeßweten erreichen kann. Alle übrigen Zuordnungsmeßwertesätze können dann zum Zwecke einer Reduzierung der Menge der Meßwerte z.B. gelöscht oder archiviert werden. Die bei dieser Ausführungsform hinzukommenden Elemente, nämlich der Fallklassifizierer und der vierte Speicher sind im Blockschaltbilder der Figur 1 in strichlierter Linie dargestellt.

Der Fallklassifizierer komprimiert die in den Zellen des dritten Speichers für die Zuordnungswertesätze enthaltenen Meßwerte. Es geht also um eine weitere Verdichtung der z.B. in der Tabelle der Figur 6 enthaltenen On-line- und Off-line-Meßwerten.

Bei einer bevorzugten Ausführung werden hierzu die Wertebereiche einzelner Off-line- und / oder On-line-Prozeßmeßwerte eines jeden Zuordnungswertesatzes, also sowohl die Kennwerte der Ausgangsstoffe und des Endproduktes, als auch die Prozeß- und Maschineneinstellungen, d.h. die technischen Meß- und Stellwerte, in feste Segmente mit jeweils einer bestimmten Bereichsbreite unterteilt. Es erfolgt quasi eine "Klassifikation" der Wertebereiche ausgewählter Off-line- und /oder On-line-Prozeßmeßwerte in Segmente mit ausgewählten Bereichsbreiten. Bevorzugt können auch alle im technischen Prozess vorkommenden Off-line- und Online-Meßwerte derart klassifiziert werden. Zur Meßwertereduktion werden in einem Zuordnungszeitpunkt aufgetretene Off-line- und On-line-Prozeßmeßwerte, die in einem dieser Segmente liegen, durch einen zu diesem Segment gehörigen sogenannten "Schwerpunktswert" ausgetauscht. Dieser kann mit der in der Mitte den dieses Segmentes liegenden Mittenwert übereinstimmen. Der Schwerpunktswert kann aber auch ein auf andere Weise über die Bereichsbreite des jeweiligen Segmentes gemittelter oder integrierter Wert sein.

Bei der Unterteilung eines Wertebereiches in Segmente und der Festlegung von deren Bereichsbreiten wird neben der Genauigkeit der möglichen meßtechnischen Erfassung des dazugehörigen Off-line- bzw. On-line On-line-Prozeßmeßwertes auch berücksichtigt, mit welcher Empfindlichkeit Schwankungen der Kennwerte des Endproduktes, d.h. dessen Qualitätskenngrößen, von Veränderungen der Werte der einzelnen On-line On-line-Prozeßmeßgrößen beeinflußt werden. Vorzugsweise werden die Segmente und deren Bereichsbreiten während der Inbetriebnahme einmal festgelegt und optimiert. Anschließend müssen diese Werte nur noch selten verändert werden. Ferner ist es durchaus möglich, daß der zu einem Meßwert gehörige Wertebereich in Segmente mit unterschiedlichen Bereichsbreiten unterteilt wird. Hierdurch kann z.B. eine von der Größe des Meßwertes abhängige Meßgenauigkeit bzw. ein gehäuftes Auftreten von Meßwerten in einem bestimmten Teil des gesamten Wertebereiches berücksichtigt werden. Der Segmentmittelwert stellt somit quasi dessen "Schwerpunkt" dar.

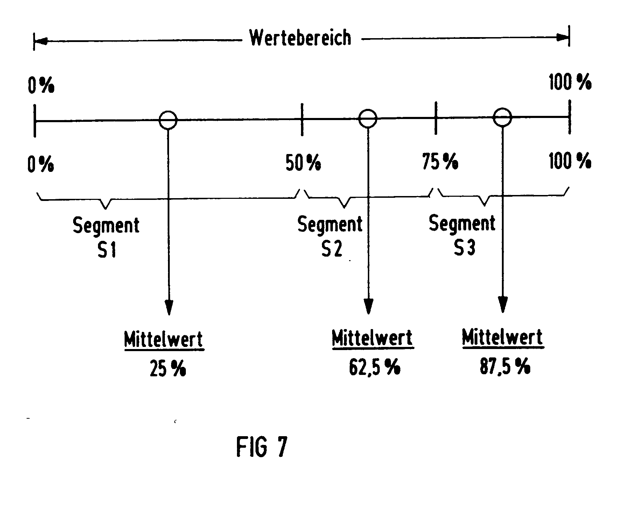

In Figur 7 ist beispielhaft die Einteilung eines von 0 bis 100 % reichenden Wertebereiches in drei Segmente S1, S2 und S3 dargestellt. Das erste Segment nimmt dabei den halben Wertebereich von 0 bis 50 % ein, während die Segmente S2 und S3 jeweils ein Viertel des Wertebereiches von 50 % bis 75 % und von 75 % bis 100 % einnehmen. Die Mittelwerte der Segmente, d.h. deren "Schwerpunkte", liegen somit für S1 bei 25 %, für S2 bei ca. 62,5 % und für S3 bei ca. 87,5 %. Anstelle von Meßwerten, die irgend einen zwischen 0 und 100 % liegenden Wert aufweisen können, werden somit nur noch drei Werte weiterverarbeitet, nämlich 25 %, 62,5 % und 87,5 %. Ein Meßwert der Größe von beispielsweise 49 % wird somit durch den Schwerpunktswert 25 %, und ein Meßwert der Größe von beispielsweise 51 % wird durch den Schwerpunktswert 62,5 % ausgetauscht.

Die Einteilung der Wertebereiche der Off-line- und On-line-Prozeßmeßwerte durch den Fallklassifizierer in Segmente und die ausschließliche Verwendung von Bereichsmittelwerten statt von fein auf der analogen Werteskala verteilten Einzelwerten hat den besonderen Vorteil, daß der Meßwerteumfang erheblich reduziert wird. Hierdurch werden aus der Fülle der im dritten Speicher enthaltenen Zuordnungswertesätzen diejenigen zu einem einzigen typischen Zuordnungswertesatz zusammengefaßt, die aufgrund nur geringfügiger Werteunterschiede dicht beieinander liegen. Zuordnungswertesätze, die nur unwesentlich abweichend erscheinende Einstellungen aufweisen, werden somit im Sinne ei ausschließliche Verwendung von Bereichsmittelwerten solche Meßwerte ausgesondert, deren Werteabweichung in Bezug auf das jeweilige Betriebsmittel des technischen Prozesses keinen oder nur einen geringfügigen Einfluß auf die davon beeinflußten Kennwerte des Endproduktes ausüben.

Die mit Hilfe des Fallklassifizierers komprimierten Zuordnungswertesätze werden bevorzugt in einem vierten Speicher der erfindungsgemäßen Vorrichtung abgelegt. Dieser enthält dann eine im Blockschaltbild der Figur 1 als "Bibliothek von klassifizierten Produktions- und Maschineneinstellungen" bezeichnete Sammlung und die damit eindeutig und reproduzierbar erreichbaren, ebenfalls klassifizierten Kennwerte des Endproduktes. Es ist somit eine " Steuerbasis " für den technischen Prozeß entstanden. Die komprimierten Zuordnungswertesätze stellen Steuerzustände des technischen Prozesses dar. Werden die in einem komprimierten Zuordnungswertesatz enthaltenen Produktions- und Maschineneinstellungen als Sollwerte auf den Betriebsmitteln des technischen Prozesses eingestellt, so entsteht ein Endprodukt mit den durch die klassifizierten Off-line-Prozeßmeßwerte vorgegebenen Eigenschaften. Es ist vorteilhaft, wenn der Fallklassifizierer einen komprimierten Zuordnungswertesatz erst dann als repräsentativ freigibt, wenn er beim Betrieb des technischen Prozesses in der Vergangenheit mehrfach aufgetreten sein.

Die mit der erfindungsgemäßen Vorrichtung entstehenden komprimierten Zuordnungswertesätze stellen charakteristische und repräsentative Prozeßzustände dar, welche charakterisiert sind durch Mittelwerte von bestimmten durch Klassifikation gewonnene Endprodukteigenschaften und den dazugehörigen, ebenfalls klassifizierten Prozeß- und Maschineneinstellungen.

Bei einer weiteren Ausführungsform der Erfindung werden nicht zu jedem einzelnen Kennwert des Endproduktes komprimierte, klassifizierte Zuordnungswertesätze gebildet. Da in der Praxis bestimmte Kennwerte des Endproduktes nicht wahlfrei, sondern nur in Abhängigkeit von anderen Kennwerten erreicht werden können, ist es auch möglich, zu einer Gruppe ausgewählter Kennwerte des Endproduktes einen einzigen dazugehörigen Zuordnungswertesatz von komprimierten und klassifizierten On-line-Prozeßmeßwerten, d.h. von klassifizierten Prozeß- und Maschineneinstellungen, durch den Fallklassifizierer zu bilden und im vierten Speicher als Steuerbasis für den technischen Prozeß zu hinterlegen.

In Figur 8 ist beispielhaft ein komprimierter und klassifizierter Zuordnungswertesatz für den Kennwert $Q_i$ eines Endproduktes dargestellt. Dieser ist ein Bestandteil der im vierten Speicher enthaltenen "Bibliothek von klassifizierten Produktions- und Maschineneinstellungen", welche als sogenannte " Steuerbasis " für den technischen Prozeß dient. Auf der linken Seite der Tabelle ist der zur Gruppe der Off-line-Meßwerte gehörige Kennwert $Q_i$ des Endproduktes in klassifizierter, komprimierter Form dargestellt. Die Werte 40, 50, 60, 70, 80 (Einheiten) stellen dabei die Mittelwerte der Segmente SG1 bis SG 4 des analogen Wertebereiches dar. Beispielsweise hat das Segment SG 3 einen Schwerpunktswert 60, eine Bereichsweite von 10 Einheiten und reicht auf der absoluten Wertskala z.B. von 55 bis 64 Einheiten.

Um ein Endprodukt mit derartig klassifizirten Werten von $Q_i$ zu erreichen, muß entsprechend dem in Figur 8 gewählten Beispiel auf den ersten On-line-Meßwert x1.1 des ersten Betriebsmittels, auf den zweiten Meßwert x7.2 des siebten Betriebsmittels und auf den dritten und siebten Meßwert x9.3, x9.7 des neunten Betriebsmittels eingegiffen werden. Alle übrigen, nicht dargestellten On-line-Prozeßmeßwerte des dazugehörigen technischen Prozesses haben entweder keinen Einfluß auf die Erzeugung des Kennwertes $Q_i$ oder können entsprechend der momentanen Einstellung am jeweiligen Betriebsmittel unverändert bleiben.

Auch die in Figur 8 zu den einzelnen Prozeß- und Maschineneinstellungen angegebenen Werte sind klassifiziert und komprimiert. So sind für dem Meßwert x1.1 die Mittelwerte 1,3,5,7,9 vorgesehen. Der dazugehörige absolute Meßbereich ist somit in gleich große Segmente mit einer Bereichsweite von jeweils 2 (Einheiten) aufgeteilt. Für den Meßwert x7.2 ist dagegen eine Klassifikation in Segmente vorgenommen, bei der die Bereichsweite mit der Wertegröße zunimmt. So sind die Mittelwerte 0,5 und 0,9 um 0,2, dagegen die Mittelwerte 1,7 und 2,1 um 0,4 voneinander entfernt. Bei dem Meßwert x9.7 wurde eine Klassifikation in Segmente vorgenommen, bei der die Bereichsweite bei einer Abnahme der Wertegröße zunimmt. So sind die Mittelwerte 150 und 130 um 20, dagegen die Mittelwerte 70 und 30 um 40 voneinander entfernt. Unter der Tabelle sind beispielhaft mögliche Einheiten zu den Prozeß- und Maschineneinstellungen angegeben.

Auch bei dieser Ausführungsform wählt schließlich der Fallauswähler aus den klassifizierten Zuordnungswertesätzen denjenigen aus, mit dem in der Vergangenheit die gewünschten Produktionsziele auf optimale erreicht worden waren, und gibt diese in Form von Sollwerten an die Betriebsmittel des technischen Prozesses aus.

**Patentansprüche**

1. Vorrichtung zur Führung eines technischen Prozesses, mit

   a) einer Vorrichtung zur zyklischen Erfassung von Meßwertesätzen der On-line-Prozeßmeßwerte von Betriebsmitteln des technischen Prozesses,

   b) einem ersten Speicher für die On-line-Prozeßmeßwerte,

   c) einer Vorrichtung zur zyklischen Erfassung von Meßwertesätzen der Off-line-Prozeßmeßwerte des technischen Prozesses, welche zumindest die Kenngrößen des Endproduktes umfassen, bei einer im Vergleich zur Erfassung der On-line-Prozeßmeßwerte erniedrigten Abtastrate,

   d) einem Fallerzeuger, welcher

      d1) einem jeden Meßwertesatz der Off-line-Prozeßmeßwerte diejenigen Meßwertesätze der On-line-Prozeßmeßwerte aus dem ersten Speicherzuordnet, welche in einem Zeitraum im ersten Speicher gespeichert wurden, in dem ein Zwischenprodukt des technischen Prozesses dasjenige Betriebsmittel passierte, durch dessen Einfluß die Kennwerte des Endproduktes maßgeblich beeinflußt wurden, und

      d2) die zugeordneten Meßwertesätze der On-line-Prozeßmeßwerte mittels glättender, mathematischer Operationen zu einem zum jeweiligen Meßwertesatz der Off-line-Prozeßmeßwerte gehörigen Zuordnungswertesatz komprimiert und in einem dritten Speicher ablegt, und mit

   e) einem Fallauswähler, der einen Zuordnungswertesatz als Sollwerte an Betriebsmittel des technischen Prozesses ausgibt, mit dem aktuelle vorliegende Produktionsziele erreicht werden können.

2. Vorrichtung nach Anspruch 1, wobei die Meßwertesätze der Off-line-Prozeßmeßwerte neben den Kenngrößen des Endproduktes auch Kenngrößen der Ausgangsstoffe enthalten.

3. Vorrichtung nach Anspruch 1 oder 2, wobei die Meßwertesätze der Off-line-Prozeßmeßwerte zusätzlich Belastungs- und Wirtschaftlichkeitskennwerte enthalten.

4. Vorrichtung nach einem der vorangegangenen Ansprüche, mit einem weiteren Speicher, in dem für jedes Betriebsmittel des technischen Prozesses diejenigen mittleren Verweilzeiten eingetragen sind, die ein Zwischenprodukt benötigt, um vom jeweiligen Betriebsmittel bis zum Ende des technischen Prozesses als Endprodukt zu gelangen, und diese mittleren Verweilzeiten vom Fallerzeuger zur Bildung der Zuordnungswertesätze herangezogen werden.

5. Vorrichtung nach einem der vorangegangenen Ansprüche, mit einem Fallklassifizierer, der die Wertebereiche von Off-line- und/oder On-line-Prozeßmeßwerten in Segmente mit ausgewählten Bereichsbreiten unterteilt, einen Prozeßmeßwert durch einen Schwerpunktswert des dazugehörigen Segmentes austauscht und auf diese Weise die im dritten Speicher enthaltenen Zuordnungswertesätze auf klassifizierte Zuordnungswertesätze reduziert, mit denen nach Ausgabe durch den Fallauswähler ein Endprodukt reproduzierbar erzeugbar ist, welches eindeutig spezifizierte Kennwerte aufweist.

6. Vorrichtung nach Anspruch 5, wobei die Segmente eines Wertebereiches unterschiedliche Bereichsbreiten aufweisen.

**Claims**

1. Apparatus for controlling an industrial process with

   a) an apparatus for the cyclical acquisition of sets of measurements of the on-line process measurements of items of the industrial process,

   b) a first memory for the on-line process measurements,

   c) an apparatus for the cyclical acquisition of sets of measurements of the off-line process measurements of the industrial process which comprise at least the parameters of the end product at a scanning rate which is reduced in comparison with the acquisition of the on-line process measurements,

   d) a case generator which

      d1) allocates to each set of measurements of the off-line process measurements the sets of measurements of the on-line process measurements from the first memory which have been stored in the first memory in a period when an intermediate product of the industrial process passed through the item through whose influence the characteristic values of the end product have been decisively influenced, and

      d2) compresses the associated sets of measurements of the on-line process measurements by means of smoothing mathematical operations to a set of allocation values pertaining to the respective set of measurements of the off-line process measurements and files them in a third memory, and with

   e) a case selector which delivers a set of allocation values as manipulated variables to items of the industrial process with which current existing production targets can be achieved.

2. Apparatus according to Claim 1, wherein the sets of measurements of the off-line process measurements contain parameters of the starting materials in addition to the parameters of the end product.

3. Apparatus according to Claim 1 or 2, wherein the sets of measurements of the off-line process measurements additionally contain load and economic efficiency characteristic values.

4. Apparatus according to one of the preceding claims, with a further memory in which, for each item of the industrial process, the average dwell times which an intermediate requires in order to pass from the respective item to the end of the industrial process as an end product are entered, and these average dwell times are used by the case generator to form the sets of allocation values.

5. Apparatus according to one of the preceding claims, with a case classifier which divides the value ranges of off-line and/or on-line process measurements into segments with selected range widths, replaces a process measurement by a centre of gravity value of the associated segment and, in this way, reduces the sets of allocation values contained in the third memory to classified sets of allocation values with which an end product having clearly specified characteristic values can be reproducibly manufactured after being delivered by the case selector.

6. Apparatus according to Claim 5, wherein the segments of a value range have different range widths.


**Revendications**

1. Dispositif de conduite d'un processus technique, comportant

   a) un dispositif de détection cyclique de blocs de valeurs de mesure du processus en ligne de moyens de production du processus technique,
   b) une première mémoire pour les valeurs de mesure du processus en ligne,
   c) un dispositif de détection cyclique de blocs des valeurs de mesure du processus technique hors ligne, qui comprennent au moins les grandeurs caractéristiques du produit final à un taux d'échantillonnage abaissé par rapport à la détection des valeurs de mesure du processus en ligne,
   d) un dispositif de synthèse de cas, qui

      d1) associe à chacun des blocs des valeurs de mesure du processus hors ligne ceux des blocs des valeurs de mesure du processus en ligne provenant de la première mémoire, qui ont été mémorisés dans la première mémoire pendant un laps de temps, dans lequel un produit intermédiaire du processus technique est passé par celui des moyens de production, par l'influence duquel les valeurs caractéristiques du produit final ont été influencées de manière déterminante, et
      d2) comprime les blocs des valeurs de mesure associées du processus en ligne au moyen d'opérations mathématiques de lissage en un bloc de valeurs d'association appartenant au bloc respectif des valeurs de mesure du processus en ligne et les mémorise dans une troisième mémoire, et comportant

      e) un dispositif de sélection de cas, qui fournit un bloc de valeurs d'association comme valeurs de consigne à des moyens de production du processus technique, par lequel des objectifs de production fixés pour l'instant peuvent être atteints.

2. Dispositif suivant la revendication 1, dans lequel les blocs des valeurs de mesure du processus en ligne comprennent, outre les grandeurs caractéristiques du produit final, également des grandeurs caractéristiques des matières premières.

3. Dispositif suivant la revendication 1 ou 2, dans lequel les blocs des valeurs de mesure du processus en ligne comprennent, en plus, des valeurs caractéristiques de charges et de rentabilité.

4. Dispositif suivant l'une des revendications précédentes, comportant une autre mémoire, dans laquelle sont enregistrés, pour chaque moyen de production du processus technique, ceux des temps moyens de traitement qu'un produit intermédiaire nécessite, pour parvenir des moyens de production considérés à la fin du processus technique en tant que produit final et ces temps moyens de traitement sont utilisés par le dispositif de synthèse de cas pour former les blocs de valeurs d'association.

5. Dispositif suivant l'une des revendications précédentes, comportant un dispositif de classification de cas, qui subdivise les domaines de valeurs de mesure de processus hors ligne et/ou en ligne en segments de largeurs de domaines sélectionnées, qui échange une valeur de mesure de processus et une valeur de barycentre du segment y associé et qui réduit de cette manière les blocs de valeurs d'association contenus dans la troisième mémoire en blocs de valeurs d'association classifiés, par lesquels un produit final, qui comporte des valeurs caractéristiques spécifiées de manière univoque, peut être produit de manière reproductible après la sortie par le dispositif de sélection de cas.

6. Dispositif suivant la revendication 5, dans lequel les segments d'un domaine de valeurs ont des largeurs de domaines différentes.

" Technischer Prozeß "

Betriebsmittel des technischen Prozesses

Prozeß- +Maschineneinstellungen
(Meß+Stellwerte)

Laboranalyse

Roh-Prozeßmeßwerte

FILTER

Vorrichtung zur zyklischen
Erfassung der
On-line-Prozeßmeßwerte

Kennwerte Ausgangsstoffe
Kennwerte Endprodukt
Wirtschaftlichkeitskennwerte

Erster Speicher :
On-line-Prozeßmeßwerte

Verweilzeiten
$TV1, ... TVi, ... TVm$

Zweiter Speicher :
Off-line-Prozeßmeßwerte

" Fallerzeuger "

Fünfter Speicher :
mittlere
Betriebsmittelverweilzeiten

Dritter Speicher :
Zuordnungswertesätze

" Fallklassifizierer "
Segmentierung der Wertebereiche der Off-line- +On-line-Prozeßmeßwerte

Vierter Speicher : klassifizierte Zuordnungswertesätze

" Bibilothek : Produktions- + Maschineneinstellungen "

" Steuerbasis "

" Fallauswähler "

Sollwerteingabe
Produktionsziele

Ausgabe eines ausgewählten Zuordnungswertesatzes
als Sollwerte an die Betriebsmittel

FIG 1

13

| Betriebsmittel 1 ... | Betriebsmittel i ... | Betriebsmittel m |
|---|---|---|

Zeitpunkt
$t_X$ :

| x1.1 | x1.2 | ... | xi.1 | xi.2 | ... | xm.1 | xm.2 | ... |
|---|---|---|---|---|---|---|---|---|

**FIG 2**

| Betriebsmittel 1 ... | Betriebsmittel i ... | Betriebsmittel m |
|---|---|---|

Zeitpunkte

$t_0$ :

| x1.1 | x1.2 | ... | xi.1 | xi.2 | ... | xm.1 | xm.2 | ... |
|---|---|---|---|---|---|---|---|---|

$t_0 + T_A$ :

| x1.1 | x1.2 | ... | xi.1 | xi.2 | ... | xm.1 | xm.2 | ... |
|---|---|---|---|---|---|---|---|---|

$t_0 + 2 \ast T_A$ :

| x1.1 | x1.2 | ... | xi.1 | xi.2 | ... | xm.1 | xm.2 | ... |
|---|---|---|---|---|---|---|---|---|

...

$t_0 + n \ast T_A$ :

| x1.1 | x1.2 | ... | xi.1 | xi.2 | ... | xm.1 | xm.2 | ... |
|---|---|---|---|---|---|---|---|---|

**FIG 3**

| Kennwerte des Endproduktes | Belastungs- und Wirtschaftlichkeits-kennwerte | Kennwerte der Ausgangsstoffe |
|---|---|---|

Zeitpunkt
$t_X$ :

| Q1... | Qn | ... | B1 ... | Bn | ... | A1 ... | An | ... |
|---|---|---|---|---|---|---|---|---|

**FIG 4**

$T_{mV1}$

$T_{mV2}$

$T_{mVm}$

Betriebsmittel 1
$T_{V1}$

Betriebsmittel 2
$T_{V2}$

Betriebsmittel m
$T_{Vm}$

Zwischenprodukte

Anfang

Ende

FIG 5

| $t_{Qi}$ | Betriebsmittel 1 | Betriebsmittel i | Betriebsmittel m |
|---|---|---|---|
| Q1 : | $x_Z1.1 = OP ...$ | $x_Zi.1= OP ...$ | $x_Zm.1= OP ...$ |
| | $x_Z1.2 = OP ...$ | $x_Zi.2= OP ...$ | $x_Zm.2= OP ...$ |
| | ... | ... | ... |
| | $x_Z1. ...= OP ...$ | $x_Zi. ...= OP ...$ | $x_Zm. ...= OP ...$ |
| Q2 : | $x_Z1.1 = OP ...$ | $x_Zi.1= OP ...$ | $x_Zm.1= OP ...$ |
| | $x_Z1.2 = OP ...$ | $x_Zi.2= OP ...$ | $x_Zm.2= OP ...$ |
| | ... | ... | ... |
| | $x_Z1. ...= OP ...$ | $x_Zi. ...= OP ...$ | $x_Zm. ...= OP ...$ |
| ... | | | |
| B1 : | $x_Z1.1= OP ...$ | $x_Zi.1= OP ...$ | $x_Zm.1= OP ...$ |
| | $x_Z1.2 = OP ...$ | $x_Zi.2= OP ...$ | $x_Zm.2= OP ...$ |
| | ... | ... | |
| | $x_Z1. ...= OP ...$ | $x_Zi. ...= OP ...$ | $x_Zm. ...= OP ...$ |
| B2 : | $x_Z1.1= OP ...$ | $x_Zi.1= OP ...$ | $x_Zm.1= OP ...$ |
| | $x_Z1.2 = OP ...$ | $x_Zi.2= OP ...$ | $x_Zm.2= OP ...$ |
| | ... | ... | ... |
| | $x_Z1. ...= OP ...$ | $x_Zi. ...= OP ...$ | $x_Zm. ...= OP ...$ |
| ... | | | |
| A1 : | $x_Z1.1= OP ...$ | $x_Zi.1= OP ...$ | $x_Zm.1= OP ...$ |
| | $x_Z1.2 = OP ...$ | $x_Zi.2= OP ...$ | $x_Zm.2= OP ...$ |
| | ... | ... | ... |
| | $x_Z1. ...= OP ...$ | $x_Zi. ...= OP ...$ | $x_Zm. ...= OP ...$ |
| A2 : | $x_Z1.1= OP ...$ | $x_Zi.1= OP ...$ | $x_Zm.1= OP ...$ |
| | $x_Z1.2 = OP ...$ | $x_Zi.2= OP ...$ | $x_Zm.2= OP ...$ |
| | ... | ... | |
| | $x_Z1. ...= OP ...$ | $x_Zi. ...= OP ...$ | $x_Zm. ...= OP ...$ |
| ... | | | |

FIG 6

Wertebereich

0% 100 %

0% 50 % 75 % 100 %

Segment
S1

Segment
S2

Segment
S3

Mittelwert
25 %

Mittelwert
62,5 %

Mittelwert
87,5 %

FIG 7

Klassifizierte, komprimierte
Prozeß- und Maschineneinstellungen für die
Betriebsmittel 1,7 und 9 :

| klassifizierter Kennwert $Q_i$ des Endproduktes | x 1.1 | x 7.2 | x 9.3 | x 9.7 |
|---|---|---|---|---|
| SG 1:  40 | 1 | 132 | 0,5 | 150 |
| SG 2:  50 | 3 | 134 | 0,9 | 130 |
| SG 3:  60 | 5 | 137 | 1,3 | 100 |
| SG 4:  70 | 7 | 141 | 1,7 | 70 |
| SG 5:  80 | 9 | 146 | 2,1 | 30 |
| ( Einheiten ) | ( bar ) | ( Grad ) | (Öffng in mm) | (Umdr. pro Min) |

# FIG 8